# NEUE EUROPÄISCHE PATENTSCHRIFT

(11) **EP 1 897 642 B2**
(45) Veröffentlichungstag und Bekanntmachung des Hinweises auf die Entscheidung über den Einspruch: **21.03.2018**
(45) Hinweis auf die Patenterteilung: 08.09.2010
(21) Anmeldenummer: 07016617.8
(22) Anmeldetag: 24.08.2007
(51) Int. Cl.: B23C 5/08, B23C 5/28

(54) **Scheibenförmiges Fräswerkzeug**
Disc-shaped milling tool
Fraise-disque

(30) Priorität: 09.09.2006 DE 102006042468
(43) Veröffentlichungstag der Anmeldung: 12.03.2008
(73) Patentinhaber: Fette GmbH, 21493 Schwarzenbek (DE)
(72) Erfinder: Engfer, Achim, 21445 Wulfsen (DE)
(74) Vertreter: Hauck Patentanwaltspartnerschaft mbB

(56) Entgegenhaltungen:
- EP-A1- 1 129 806
- EP-A1- 1 129 806
- WO-A1-94/09937
- DE-A1- 3 104 752
- DE-A1- 3 105 933
- DE-A1- 10 145 006
- DE-A1- 19 805 885
- US-B- 2 080 401
- US-B- 4 870 946
- US-B- 5 290 135
- 'Prospekt der Fa.Ingersoll"Windkraft"'
- GERHARD MATTHÉE: 'Lueger Lexikon d.Technik Band8', 01 Januar 1967, DTSCH VERLAGSANSTALT, STUTTGART, ISBN TN 2116 vol. 'Lex.d.Fertigungstechn.+Arbeitsm.', Seiten 291 - 303
- AB SANDVIK COROMAT: 'Handbuch der Zerspanung', 01 Januar 1995, TOFTERS TRYCKERI AB, SCHEWEDEN, ISBN 91-972299-4-6 vol. AB SANDVIK COROMANT: 'Standardwerk fèr Praktiker'

## Beschreibung

Die Erfindung bezieht sich auf einen scheibenförmigen Zahnformfräser nach dem Oberbegriff des Patentanspruchs 1. Ein solches scheibenförmiges Fräswerkzeug ist aus der DE-A-101 45 006 bekannt.

Es ist bekannt, Fräswerkzeuge mit einem Kühlfluid zu versorgen. Eine Versorgungsmöglichkeit erfolgt über die sogenannte Innenkühlung. Bei dieser wird das Kühlfluid über die Spindel oder Welle der Werkzeugmaschine herangeführt und dann durch ein geeignetes Kanalsystem im Werkzeug zu den Schneidkanten.

Es sind scheibenförmige Fräswerkzeuge bekannt, bei denen an einzelnen oder mehreren scheibenförmigen Grundkörpern (z.B. Duplex-Zahnform-Fräser), am Umfang in entsprechend geformten Taschen Schneidplatten angebracht sind. Den Schneidplatten bzw. den Aufnahmetaschen dafür sind Spankammern zugeordnet. Es ist bekannt, die Spankammern über radiale Kanäle mit der zentralen Durchbohrung im Grundkörper zu verbinden, wodurch das über die Welle oder der Spindel zugeführte Fluid zu den einzelnen Spankammern und damit zu den Schneidplatten gelangen kann. Insbesondere bei großen Werkzeugen müssen sehr tiefe Löcher mit relativ kleinem Durchmesser gebohrt oder erodiert werden. Ein solches Fertigungsverfahren ist aufwendig, und die Austrittsöffnungen in den Spankammern sind oft nicht so wählbar, daß das Kühlfluid der Schneidplatte optimal zugeführt wird. Aus US 2,080,401 A ist ein Fräswerkzeug mit einem scheibenförmigen Messerkopf bekannt, bei dem in einem Ausführungsbeispiel ein Ringkanal und Verbindungskanäle zwischen einem Messerkopf und einer Abdeckscheibe gebildet sind. Die Abdeckscheibe weist Bohrungen auf, durch die Kühlfluid auf die Vorderseiten von Messern geleitet werden kann.

Der Erfindung liegt die Aufgabe zugrunde, einen scheibenförmigen Zahnformfräser zu schaffen, bei dem der Fertigungsaufwand für die Bereitstellung einer Innenkühlung reduziert und die Kühlung insgesamt effektiver gemacht wird.

Diese Aufgabe wird durch die Merkmale des Patentanspruchs 1 gelöst. Vorteilhafte Ausführungen der erfindungsgemäßen Vorrichtung sind in den Unteransprüchen beschrieben.

Bei dem erfindungsgemäßen Zahnformfräser ist der scheibenförmige Grundkörper aus zwei koaxial aneinander liegenden Teilscheiben gebildet, die zwischen sich einen konzentrisch angeordneten Ringkanal bilden. Der Ringkanal ist über mindestens einen Verbindungskanal mit der Durchbohrung verbunden und kann daher an die Kühlmittelzufuhr in der Welle oder Spindel für das Fräswerkzeug angeschlossen werden. Der Ringkanal kann relativ nahe an den Spankammern liegen. Es sind daher nur relativ kurze Bohrungsabschnitte erforderlich, um den Ringkanal mit den jeweiligen Spankammern zu verbinden. Die Bohrungsabschnitte haben eine Länge, die nur ein Bruchteil der Länge des Verbindungskanals ist.

Die erfindungsgemäße Ausbildung einer Innenkühlung bei scheibenförmigen Zahnformfräsern weist Vorteile auf. Es ist relativ unaufwendig, in Teilscheiben, durch fräsendes Bearbeiten Verbindungskanäle und den Ringkanal herzustellen. Lediglich die relativ kurzen Bohrungsabschnitte müssen gebohrt werden. Somit ist der Fertigungsaufwand für eine Innenkühlung bei den angesprochenen Fräswerkzeugen deutlich herabgesetzt.

Die relativ kurzen Bohrungsabschnitte können so eingebracht werden, daß sie an den günstigsten Stellen in den Spankammern austreten, um eine wirksame Kühlung der Schneiden zu bewirken. Dadurch ist die bei der Erfindung vorgesehene Innenkühlung effektiver.

In einer Ausgestaltung der Erfindung ist vorgesehen, daß der Verbindungskanal und/oder die Bohrungsabschnitte in einem Winkel zum Radius angeordnet ist/sind derart, daß das strömende Kühlfluid um einen Winkel < 90° umgelenkt wird. Mit einer solchen Maßnahme kann ein Venturi Effekt verhindert werden, der bewirken würde, daß das Fluid nicht nur nicht zu den Spankammern geleitet, sondern umgekehrt über die Bohrungsabschnitte Luft angesaugt wird.

In einer weiteren Ausgestaltung der Erfindung ist vorgesehen, daß die Strömungsquerschnitte von Verbindungskanal (A1), Ringkanal (A2) und Bohrungsabschnitten (A3) so ausgelegt sind, daß A1 > A2 > A3 ist. Auf diese Weise wird sichergestellt, daß mit einem vorgegebenen Druck einer Quelle für Kühlfluid eine optimale Kühlung der Schneiden am Fräswerkzeug erhalten wird.

In einer anderen Ausgestaltung der Erfindung ist vorgehen, daß die Bohrungsabschnitte an Stellen mit dem Ringkanal verbunden sind, die einen Abstand zu der Stelle aufweisen, an der der Verbindungskanal in den Ringkanal mündet. Dadurch wird vermieden, daß z.B. derjenige Bohrungsabschnitt, der unmittelbar in der Nähe des Verbindungskanals mit dem Ringkanal verbunden ist, mehr Kühlfluid zugeführt erhält, als die benachbarten. Um den Ringkanal ausreichend zu versorgen, reicht es z.B. aus, zwei diametrale Verbindungskanäle vorzusehen.

Bei einem geteilten Zahnform-Fräser können beide Scheiben zusammen den Ringkanal bilden. Bei einem einteiligen Scheibenfräser kann die zweite Teilscheibe von einem Anschlußflansch gebildet werden.

Der Ringkanal wird hälftig oder teilweise in beiden Teilscheiben gefräst. Es versteht sich, daß die Teilscheiben gegeneinander gepreßt und verschraubt werden und Dichtmittel vorhanden sind, welche ein Entweichen des Kühlfluids verhindern.

Ausführungsbeispiele der Erfindung werden nachfolgend anhand von Zeichnungen näher erläutert.
- Fig. 1: zeigt perspektivisch einen zweiteiligen Duplex-Zahnform-Fräser nach der Erfindung in auseinander gebauter Position.
- Fig. 2: zeigt eine perspektivische Teilansicht einer Teilscheibe des Zahnform-Fräsers nach Fig. 1.
- Fig. 3: zeigt einen einteiligen Zahnform-Fräser nach der Erfindung in perspektivischer Darstellung.
- Fig. 4: zeigt in Teilansicht die Seitenansicht der Zahnform-Fräser-Scheibe nach Fig. 3.
- Fig. 5: zeigt schematisch ein Kanalsystem für eine Innenkühlung eines Fräswerkzeugs nach der Erfindung.

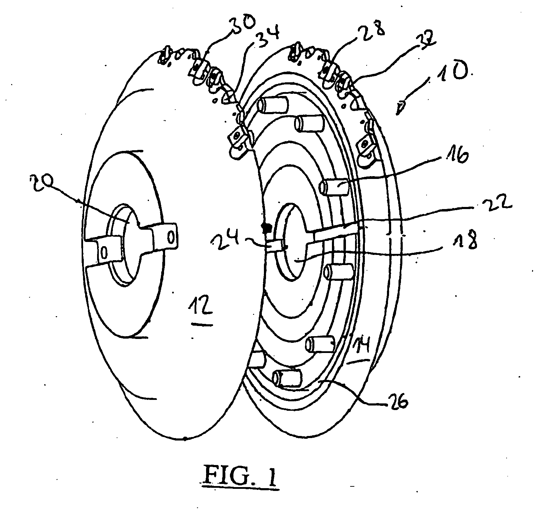

In Fig. 1 ist ein Duplex-Zahnform-Fräser dargestellt mit zwei scheibenförmigen Grundkörpern 12, 14 die koaxial bzw. konzentrisch zusammen montiert werden, wobei Schrauben 16 des Grundkörpers 14 mit nicht gezeigten Gewindebohrungen des Grundkörpers 12 zusammenwirken, um die Teilscheiben 12, 14 zu einer Einheit zu verbinden. Die Teilscheiben 12, 14 haben koaxiale Durchbohrungen 18, 20, wobei die Durchbohrung 18 mit zwei gegenüberliegenden Verbindungskanälen 22, 24 in Verbindung steht, die radial in den Grundkörper 14 eingearbeitet sind. Die Verbindungskanäle 22, 24 können mit Kanälen in einer Spindel oder einer Welle in Verbindung sein, die Teil der Werkzeugmaschine ist und die mit einer Quelle für Kühlfluid in Verbindung stehen. Das Kühlfluid ist z.B. Gas bzw. eine Flüssigkeit.

Am anderen Ende sind die Verbindungskanäle 22, 24 mit einem Ringkanal 26 in Verbindung, der konzentrisch an der Innenseite des scheibenförmigen Grundkörpers 14 eingearbeitet ist.

Am Umfang der scheibenförmigen Grundkörper 12, 14 sind Aufnahmetaschen geformt zur Aufnahme von Schneidplatten 28 bzw. 30, die in den Aufnahmetaschen durch Verschraubung festgelegt sind. Die Schneidplatten 28, 30 sind wechselweise am Umfang der Grundkörper 12, 14 angeordnet. Den Schneidplatten 28, 30 zugeordnet sind Spankammern 32, 34.

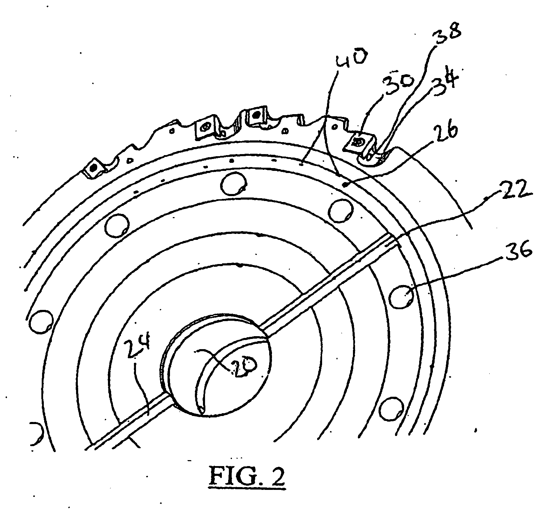

In Fig. 2 ist die Innenseite des Grundkörpers 12 dargestellt mit den Gewindebohrungen 36 zur Aufnahme der Schrauben 16. Auch im Grundkörper 12 ist ein Ringkanal 26 geformt und es sind diametral gegenüberliegende Verbindungskanäle 22, 24 vorgesehen, welche mit den Verbindungskanälen 22, 24 zur Deckung gebracht werden, wenn die Grundkörper 12, 14 gegeneinander gesetzt werden.

Wie insbesondere in Fig. 2 zu erkennen, sind zwischen dem Ringkanal 26 und dem Spankammern Bohrungsabschnitte geformt, von denen z.B. bei 38 das Ende in der Spankammer 34 und bei 40 der Anfang im Ringkanal 26 zu erkennen sind. Wird über die nicht gezeigte Spindel oder Welle ein Kühlfluid unter Druck zugeführt, gelangt es in die Verbindungskanäle 22, 24 und von dort in den Ringkanal 26 und kann von diesem über die zahlreichen Bohrungsabschnitte zu den Spankammern 32, 34 der scheibenförmigen Grundkörper 12, 14 strömen, um die Schneiden der Schneidplatten 28, 30 in geeigneter Weise zu kühlen.

Die Verbindungskanäle 22, 24 und auch der Ringkanal 26 sind durch einfache fräsende Bearbeitung geformt. Lediglich die Bohrungsabschnitte müssen mit Bohrwerkzeugen hergestellt werden. Das die Bohrungsabschnitte kurz sind können sie an optimaler Stelle angebracht werden, um eine effektive Kühlung zu bewerkstelligen.

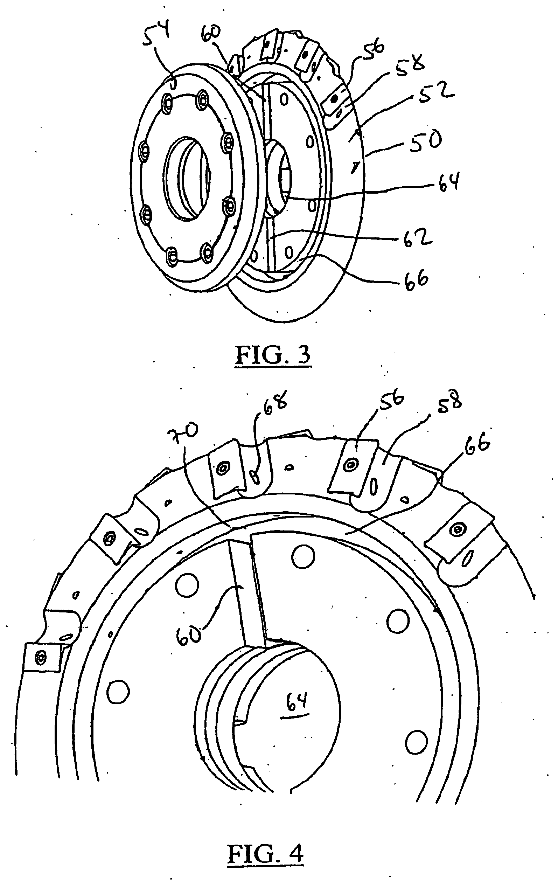

In den Fign. 3 und 4 ist ein einteiliger Formfräser 50 dargestellt mit einem scheibenförmigen Grundkörper 52 und einem getrennten Anschlußflansch 54, der über eine geeignete Schraubverbindung, auf die im einzelnen nicht eingegangen wird, mit dem Grundkörper 52 verbunden wird. Am Umfang des Grundkörpers 50 sitzen wiederum abwechselnd Schneidplatten 56, wie an sich bekannt, denen Spankammern 58 zugeordnet sind. Im Grundkörper 52 sind diametral gegenüberliegend Verbindungskanäle 60, 62 geformt, die in Verbindungstehen mit der zentralen Durchbohrung 64 und am anderen Ende mit einem Ringkanal 66. Der Ringkanal 66 ist wiederum mit Bohrungsabschnitten in Verbindung, die in den Spankammern 58 münden. Das Mündungsende ist in Fig. 4 bei 68 und der Anfang bei 70 zu erkennen. Das Kühlprinzip bzw. das Kanalsystem ist vergleichbar mit dem nach den Fign. 1 und 2.

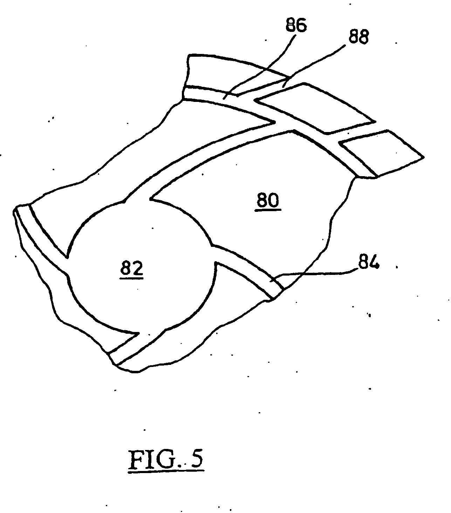

In Fig. 5 ist bei 80 ein Grundkörper für ein Fräswerkzeug angedeutet, ohne daß Einzelheiten dargestellt sind. Man erkennt die zentrale Durchbohrung 82 zur Aufnahme einer Spindel oder einer Welle. Die Durchbohrung 82 steht in Verbindung mit vier Verbindungskanälen 84, weiche in die Seitenfläche des Grundkörpers 80 eingearbeitet sind. Sie erstrecken sich leicht bogenförmig abwelchend von dem Radius, der durch den Anfangspunkt der Verbindungskanäle 84 verläuft. Die Verbindungskanäle 84 sind in Verbindung mit einem Ringkanal 88, von dem Bohrungsabschnitte 88 zu einzelnen nicht dargestellten Spankammern verlaufen. Wie erkennbar, ist das Ende des Verbindungskanals 84 annähernd zwischen zwei Bohrungsabschnitten 88 angeordnet, so daß das durch den Verbindungskanal 84 strömende Fluid nicht unmittelbar auf einen Bohrungsabschnitt 88 auftrifft. Außerdern verlaufen die Bohrungsabschnitte 88 schräg zum Ringkanal 86, so daß die Umlenkung des Fluids um einen Winkel von < 90° stattfindet. Dadurch wird ein Saugdüseneffekt beim Strömen des Fluids im Ringkanal 86 verhindert, der sonst Luft über die Bohrungsabschnitte 88 ansaugen würde.

Außerdem können die Verbindungskanäle 84 und auch die Bohrungsabschnitte 88 nahe ihrem abströmseitigen Ende eine Verringerung des Querschnitts aufweisen, um das Fluid in seiner Geschwindigkeit und damit den Druck zu vergrößern.

Die Bohrungsabschnitte weisen vorzugsweise einen sehr kleinen Durchmesser auf, um Verstopfungen zu vermelden. Es versteht sich außerdem, daß für den Zusammenbau der Teilscheiben bei den Ausführungsformen nach den Fign. 1 bis 4 eine ausreichende Abdichtung vorhanden ist, die dafür sorgt, daß das Fluid nur in dem vorgegebenen Kanalsystem strömt und nicht nach außen entweicht mit Ausnahme an den dafür vorgesehenen Stellen.

Wie ohne weiteres zu erkennen, ist das Kanalsystem sehr einfach herstellbar. Außerdem können die Kanäle und Bohrungen weitgehend gratfrei hergestellt werden, so daß Widerstände die Strömung des Kühlfluids nicht behindern.

## Patentansprüche

1. Scheibenförmiger Zahnform-Fräser mit einem scheibenförmigen Grundkörper, der eine zentrale axiale Durchbohrung für die Aufnahme einer Antriebswelle aufweist sowie am Umfang eine Mehrzahl von Taschen für die Aufnahme von Schneidplatten, wobei den Taschen Spankammern zugeordnet sind und zwischen der zentralen Durchbohrung und den Spankammern ein Kanalsystem angeordnet ist für den Durchgang von Kühlfluid, das in den Spankammern austritt, wobei der scheibenförmige Grundkörper aus mindestens zwei koaxial aneinander liegenden Teilscheiben (12, 14, 52, 54) gebildet ist, die zwischen sich einen konzentrisch angeordneten Ringkanal (26, 66) bilden, der über mindestens einen Verbindungskanal (22, 24, 60, 62) mit der Durchbohrung (18, 20, 64) verbunden ist und der Ringkanal über relativ kurze Bohrungsabschnitte mit den Spankammern (32, 34, 58) verbunden ist, wobei die Bohrungsabschnitte in den Spankammern (32, 34, 58) austreten und die Länge der Bohrungsabschnitte ein Bruchteil der Länge des mindestens einen Verbindungskanals (22, 24, 60, 62) ist, wobei der Ringkanal (26, 66) und der mindestens eine Verbindungskanal (22, 24, 60, 62) durch fräsende Bearbeitung geformt sind, und wobei der Ringkanal (26) in beiden Teilscheiben ausgebildet ist.

2. Zahnform-Fräser nach Anspruch 1, **dadurch gekennzeichnet, dass** der Verbindungskanal (84) und/oder die Bohrungsabschnitte (88) im Winkel zum Radius angeordnet ist/sind derart, dass das strömende Kühlfluid um einen Winkel von < 90° umgelenkt wird.

3. Zahnform-Fräser nach Anspruch 1 oder 2, **dadurch gekennzeichnet, dass** die Strömungsquerschnitte von Verbindungskanal (84), Ringkanal (86) und Bohrungsabschnitten (88) in dieser Reihenfolge abnehmen.

4. Zahnform-Fräser nach einem der Ansprüche 1 bis 3, **dadurch gekennzeichnet, dass** die Bohrungsabschnitte (88) an Stellen mit dem Ringkanal (86) verbunden sind, die einen Abstand zur Stelle aufweisen, an der der Verbindungskanal (84) in den Ringkanal (86) mündet.

5. Zahnform-Fräser nach einem der Ansprüche 1 bis 4, **dadurch gekennzeichnet, dass** die Teilscheiben (12, 14) einen Duplex-Zahnform-Fräser bilden.

6. Zahnform-Fräser nach einem der Ansprüche 1 bis 5, **dadurch gekennzeichnet, dass** eine Teilscheibe von einem Anschlussflansch (54) gebildet ist.

7. Zahnform-Fräser nach einem der Ansprüche 1 bis 6, **dadurch gekennzeichnet, dass** ringförmige Kontrollflächen der Teilscheiben als Dichtflächen ausgebildet sind.

8. Zahnform-Fräser nach einem der Ansprüche 1 bis 7, **dadurch gekennzeichnet, dass** in die ringförmigen Kontaktflächen der Teilscheiben Dichtungen eingebracht sind.

## Claims

1. A disc-shaped tooth-form milling cutter, with a disc-shaped main body, which has a central axial through bore for the accommodation of a drive shaft as well as a plurality of pockets for the accommodation of cutting inserts on its perimeter, wherein chip spaces are associated to the pockets and a channel system is arranged between the central through bore and the chip spaces for the passage of cooling fluid which emerges in the chip spaces, wherein the disc-shaped main body is formed by at least two sub-discs (12, 14, 52, 54) coaxially sitting close together, which form a concentrically arranged ring channel (26, 66) between themselves, which is connected to the through bore (18, 20, 64) via at least one connection channel (22, 24, 60, 62), and the ring channel is connected to the chip spaces (32, 34, 58) via relatively short bore portions, wherein the bore portions open into the chip spaces (32, 34, 58) and the length of the bore portions is a fraction of the length of the at least one connection channel (22, 24, 60, 62), wherein the ring channel (26, 66) and the at least one connection channel (22, 24, 60, 62) are formed via milled processing and wherein the ring channel (26) is formed in both sub-discs.

2. A tooth-form milling cutter according to claim 1, **characterised in that** the connection channel (84) and/or the bore portions (88) is/are arranged at an angle with respect to the radius, such that the flowing cooling fluid is deflected about an angle of <90°.

3. A tooth-form milling cutter according to claim 1 or 2, **characterised in that** the flow areas of connection channel (84), ring channel (86) and bore portions (88) decrease in this order.

4. A tooth-form milling cutter according to one of claims 1 to 3, **characterised in that** the bore portions (88) are connected with the ring channel (86) on locations which have a distance to that location at which the connection channel (84) runs out into the ring channel (86).

5. A tooth-form milling cutter according to one of claims 1 to 4, **characterised in that** the sub-discs (12, 14) form a duplex tooth-form milling cutter.

6. A tooth-form milling cutter according to one of claims 1 to 5, **characterised in that** one sub-disc is formed by an attachment flange (54).

7. A tooth-form milling cutter according to one of claims 1 to 6 **characterised in that** annular control surfaces of the sub-discs are executed as sealing surfaces.

8. A tooth-form milling cutteraccording to one of claims 1 to 7, **characterised in that** sealings are incorporated into the annular contact surfaces of the sub-discs.

## Revendications

1. Fraise-disque pour taille d'engrenages avec un corps de base en forme de disque, qui a un perçage axial central pour loger un arbre moteur et dans la périphérie une pluralité de poches pour loger des plaquettes coupantes, des logements de copeaux étant associés aux poches et un système de canaux étant disposé entre le perçage central et les logements de copeaux pour le passage de fluide réfrigérant qui suinte dans les logements de copeaux, **caractérisé en ce que** le corps de base en forme de disque est formé par au moins deux disques partiels coaxialement juxtaposés (12, 14, 52, 54), qui forment entre eux un canal circulaire (26, 66) disposé concentriquement, qui est relié avec le perçage (18, 20, 64) à travers au moins un canal de connexion (22, 24, 60, 62) et que le canal circulaire est relié avec les logements de copeaux (32, 34, 58) à travers des portions de perçage relativement courtes, les portions de perçage suintantes dans les logements de copeaux (32, 34, 58) et la longueur des portions de perçage étant une fraction de la longueur de l'au moins un canal de connexion (22, 24, 60, 62), le canal circulaire (26, 66) et l'au moins un canal de connexion (22, 24, 60, 62) étant usinés par fraisage, et le canal circulaire (26) étant formé dans tous les deux disques partiels.

2. Fraise pour taille d'engrenages selon la revendication 1, **caractérisé en ce que** le canal de connexion (84) et/ou les portions de perçage (88) est/sont disposés en un angle au rayon, de façon que le fluide réfrigérant circulant est renvoyé pour un angle de <90°.

3. Fraise pour taille d'engrenages selon la revendication 1 ou 2, **caractérisé en ce que** les sections de passage du canal de connexion (84), du canal circulaire (86) et des portions de perçage (88) décroissent dans cet ordre.

4. Fraise pour taille d'engrenages selon l'une des revendications 1 à 3, **caractérisé en ce que** les portions de perçage (88) sont reliées au canal circulaire (86) dans des positions qui ont un écart à la position dans laquelle le canal circulaire s'écoule dans le canal circulaire (86).

5. Fraise pour taille d'engrenages selon l'une des revendications 1 à 4, **caractérisé en ce que** les disques partiels (12, 14) forment une fraise pour taille d'engrenages à double action.

6. Fraise pour taille d'engrenages selon l'une des revendications 1 à 5, **caractérisé en ce que** un disque partiel est formé par une collerette de connexion (54).

7. Fraise pour taille d'engrenages selon l'une des revendications 1 à 6, **caractérisé en ce que** des surfaces de contrôle annulaires des disques partiels sont formées comme des surfaces d'étanchéité.

8. Fraise pour taille d'engrenages selon l'une des revendications 1 à 7, **caractérisé en ce que** des joints d'étanchéité sont incorporés dans les surfaces de contact annulaires des disques partiels.
